# EUROPEAN PATENT SPECIFICATION

(11) **EP 3 812 862 B1**
(45) Date of publication and mention of the grant of the patent: **13.12.2023**
(21) Application number: 19822831.4
(22) Date of filing: 22.05.2019
(51) Int. Cl.: G05B 23/02, G01N 25/00, H04M 1/00, G05B 19/042

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF ET PROCÉDÉ DE TRAITEMENT D'INFORMATIONS, ET PROGRAMME

(30) Priority: 19.06.2018 JP 2018116216
(43) Date of publication of application: 28.04.2021
(73) Proprietor: OMRON Corporation, Shiokoji-dori, Shimogyo-ku, Kyoto-shi Kyoto 600-8530 (JP)
(72) Inventor: SATO, Takahiro, Kizugawa-shi, Kyoto 619-0283 (JP); TAKATORI, Koji, Kizugawa-shi, Kyoto 619-0283 (JP); YAMAMOTO, Michihiro, Kizugawa-shi, Kyoto 619-0283 (JP); MIZUTANI, Seiji, Kizugawa-shi, Kyoto 619-0283 (JP); MURAYAMA, Shinji, Kizugawa-shi, Kyoto 619-0283 (JP)
(74) Representative: Becker, Eberhard
(86) International application number: PCT/JP2019/020357
(87) International publication number: WO 2019/244551

(56) References cited:
- WO-A1-2017/191059
- DE-T2- 60 204 358
- JP-A- S63 114 512
- JP-A- 2017 211 801

## Description

### BACKGROUND

### Technical Field

The present invention relates to an information processing apparatus or the like that presents information for determining whether the installation state of a control device in a control panel is appropriate.

### Related Art

A technique is known in which, when a worker (user) performs work on a device, a human error of erroneously performing work on a device different from the work target is suppressed. For example, patent literature 1 discloses a cooperative work support apparatus with which a barcode attached to a device for cooperative work can be read by a barcode reader to confirm that the device is the work target, when work is performed with emphasis between a control room and a site.

### [Literature of related art]

### [Patent literature]

Patent literature 1: Japanese Patent Laid-open No. 11-231909 (Published on August 27, 1999)
WO 2017/191059 A1 discloses a configuration system for reconfiguring a switch cabinet including a detection unit which detects functional units of an electric circuit, which are mounted within a switch cabinet, by way of characteristic features of the functional units, which have unambiguous identification features which are read out by the detection unit. A configuration unit contains a processor, which determines an electric circuit diagram of the electric circuit on the basis of the functional units of the electric circuit which are detected by way of the characteristic features and automatically replaces the detected functional units of the determined circuit diagram with associated replacement functional units which are stored in a database. An output unit is provided for outputting the determined replacement functional units.
DE 60204358 T2 discloses a method for arranging a switchboard installation suitable for distributing electrical power to a system of power consumers forming part of one or more electrical circuits, to which end the switchboard installation is built up of a number of electrical modules arranged in a specific combination, which modules influence the operating temperature in the switchboard installation by generating and emitting heat. Each type of module of which the switchboard installation is built up is considered to be a source of heat caused by watt losses that are know in advance.

### SUMMARY

### [Problems to be Solved]

However, the invention described in patent literature 1 has a problem that it is possible to confirm a device which is the work target but it is not possible to determine whether the installation state of the device which is the work target is appropriate. For example, in the invention described in patent literature 1, it is not possible to present information, such as heat generation state information of a control device, for determining whether the installation state of the control device is appropriate. Furthermore, it is not possible to determine whether the control device should be replaced or the like according to prediction of the heat generation state.

One aspect of the present invention has been made in view of the above problems, and an object thereof is to provide an information processing apparatus or the like that presents information for determining whether the installation state of a control device is appropriate.

### [Means to Solve Problems]

The present invention is provided by the appended claims. The following disclosure serves a better understanding of the present invention and adopts the following configurations in order to solve the above problems.

That is, an information processing apparatus according to one aspect of the present disclosure includes: an image recognition unit that acquires a captured image of a control panel equipped with a plurality of control devices in which device identification images indicating model information are arranged, and recognizes the device identification images included in the captured image; a device specification unit that specifies the model information and installation positions of the control devices based on the device identification images which are recognized by the image recognition unit; a heat generation prediction unit that predicts a heat generation state in the control panel based on the model information and the installation positions of the control devices which are specified by the device specification unit; and an output control unit that outputs heat generation state information which is predicted by the heat generation prediction unit. The output control unit generates and outputs a heat generation distribution map in the control panel based on the heat generation state information.

An information processing method according to one aspect of the present disclosure may include: an image recognition step of acquiring a captured image of a control panel equipped with a plurality of control devices in which device identification images indicating model information are arranged, and recognizing the device identification images included in the captured image; a device specification step of specifying the model information and installation positions of the control devices based on the device identification images which are recognized by the image recognition step; a heat generation prediction step of predicting a heat generation state in the control panel based on the model information and the installation positions of the control devices which are specified by the device specification step; and an output control step of outputting heat generation state information which is predicted by the heat generation prediction step. The output control step generates and outputs a heat generation distribution map in the control panel based on the heat generation state information.

### [Effect]

According to one aspect of the present invention, it is possible to provide an information processing apparatus that improves the convenience of work on a control panel.

### BRIEF DESCRIPTION OF THE DRAWINGS

FIG. 1 is a block diagram showing an example of a main configuration of an information processing apparatus according to an embodiment.
FIG. 2 is a schematic diagram showing an example of an application scene of the information processing apparatus according to the embodiment.
FIG. 3 is a schematic diagram showing an example of a method of calculating a distance between control devices in the information processing apparatus according to the embodiment, wherein (a) of FIG. 3 shows an example of using a scale to calculate the distance, and (b) of FIG. 3 shows an example of using a captured image, model information and the like to calculate the distance.

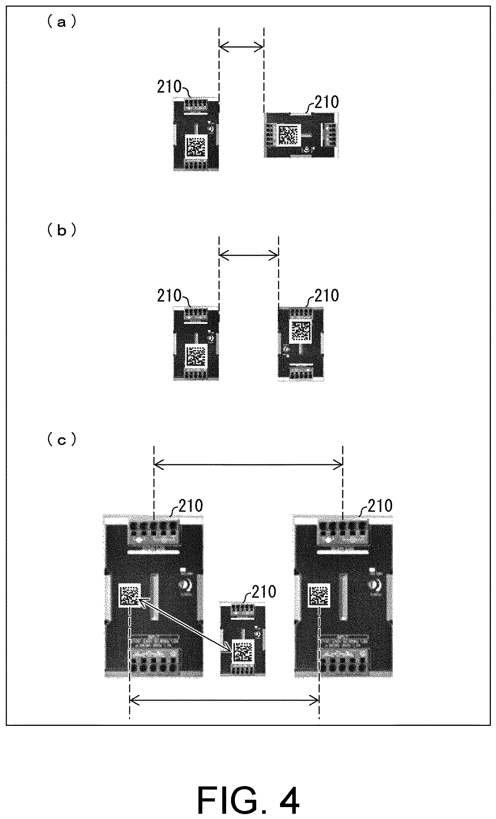

FIG. 4 is a schematic diagram showing an example in which the information processing apparatus defines the distance between control devices when two adjacent control devices have different ID code orientations or device sizes in the information processing apparatus according to the embodiment. (a) of FIG. 4 shows an example in which a distance between facing surfaces when one of the two adjacent control devices rotates by 90 degrees with respect to the other control device is set as the distance between the two control devices. (b) of FIG. 4 shows an example in which a distance between facing surfaces when one of the two adjacent control devices rotates by 180 degrees with respect to the other control device is set as the distance between the two control devices. (c) of FIG. 4 shows that two control devices used for measuring the distance can be arbitrarily selected when one small control device exists between two large control devices.
FIG. 5 is a flowchart showing an example of processing executed by the information processing apparatus according to the embodiment.
FIG. 6 is a block diagram showing an example of a main configuration of an information processing apparatus according to a variation example.
FIG. 7 is a schematic diagram showing an example of partial accommodation regions included in a control panel in the variation example.
FIG. 8 is a flowchart showing an example of processing executed by the information processing apparatus according to the variation example.

### DESCRIPTION OF THE EMBODIMENTS

### §1 Application example

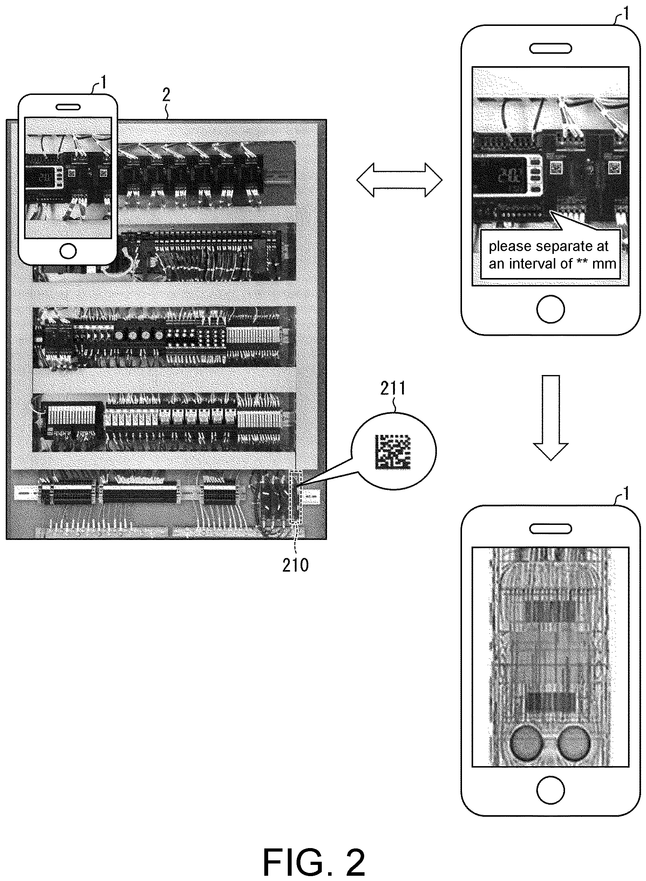

First, an example of a scene in which the present invention is applied is described with reference to FIG. 2. FIG. 2 schematically illustrates an example of an application scene of an information processing apparatus 1 according to the embodiment. The information processing apparatus 1 according to the embodiment predicts a heat generation state in a control panel 2 based on model information and installation positions of a plurality of control devices 210 installed in the control panel 2 and outputs the predicted heat generation state. Moreover, each of the plurality of control devices 210 is equipped with a device identification image that is an image in one-to-one association with each control device 210 and showing the model information of the control device 210.

In the illustrated example, the device identification image is shown as an ID code 211, which is a two-dimensional code attached to a front surface of the control device 210. When a captured image of the control panel 2 is acquired, the information processing apparatus 1 recognizes the ID code 211 included in the captured image and specifies the control device 210 associated with the ID code 211 (left side of the diagram). Then, when all the control devices 210 installed in the control panel 2 are specified, the information processing apparatus 1 calculates, for each control device 210, a heat generation amount based on the model information and the installation positions in the control panel 2, wherein the model information includes information such as the heat generation amount when the control device 210 operates at the rated value.

After that, the information processing apparatus 1 predicts a heat generation state of the entire control panel 2 from the heat generation amount of each control device 210, and displays information according to the predicted result. For example, when the heat generation amount in the specific control device 210 is excessive and the control device 210 is preferably separated from another adjacent control device 210, the information processing apparatus 1 outputs a message such as "please separate at an interval of ** mm" (center of the diagram). The information processing apparatus 1 may illustrate the predicted heat generation state in a form such as thermography (right side of the diagram). In this way, the information processing apparatus 1 can predict the heat generation state in the control panel 2 from the captured image of the control panel 2 and output the information according to the predicted result. Thereby, for example, it is possible to determine the control device 210 having an unsuitable heat generation state. Thus, it is possible to provide an information processing apparatus that is capable of determining whether the control device 210 installed in the control panel 2 should be replaced or the like according to the prediction of the heat generation state and that improves the convenience of work on the control panel.

### §2 Configuration example

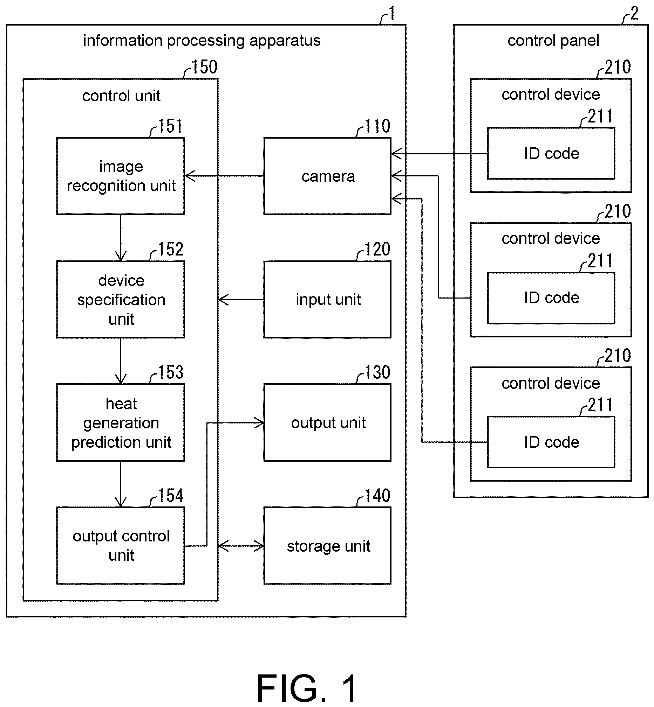

Hereinafter, an embodiment of the present invention is described in detail with reference to FIG. 1 and FIGS. 3 to 5.

### (Configuration of information processing apparatus)

A configuration of the information processing apparatus 1 according to the embodiment is described with reference to FIG. 1. FIG. 1 is a block diagram showing an example of a main configuration of the information processing apparatus 1.

The information processing apparatus 1 can predict the heat generation state of the control panel 2 in which the plurality of control devices 210 is installed, and output the information according to the prediction result. The information processing apparatus 1 may be, for example, a mobile information terminal such as a smartphone with a camera, a tablet terminal, or a small notebook PC. The information processing apparatus 1 includes a camera 110, an input unit 120, an output unit 130, a storage unit 140, and a control unit 150. The control unit 150 includes an image recognition unit 151, a device specification unit 152, a heat generation prediction unit 153, and an output control unit 154.

The camera 110 captures an image according to an instruction from the control unit 150. The captured image may be a partial captured image of the control panel 2. The captured image preferably includes at least one ID code 211 attached to the control device 210, and more preferably includes a plurality of ID codes 211.

The input unit 120 is an interface for inputting when a user of the information processing apparatus 1 causes the information processing apparatus 1 to perform a desired operation. The input unit 120 may be, for example, a touch panel integrally formed with the output unit 130 described later.

The output unit 130 is an interface used by the information processing apparatus 1 to output various information to the outside. The output unit 130 includes at least a display that displays the captured image or the like captured by the camera 110 according to the instruction from the output control unit 154, but may include a speaker that outputs sound to the outside, a motor that generates vibration, or the like.

The storage unit 140 stores various information handled by the information processing apparatus 1. The storage unit 140 may include at least information for associating the control device 210 with the ID code 211 that is device identification information attached to the control device 210, or further include layout information indicating the installation positions of the plurality of control devices 210 in the control panel 2. In addition, the model information that is information about specifications including the outer shape or the like of the control device 210 may be included.

The control unit 150 centrally controls each unit of the information processing apparatus 1. The control unit 150 uses the camera 110 to capture an image and transmits the acquired image to the image recognition unit 151. The control unit 150 executes various operations based on a user input accepted by the input unit 120.

When the captured image is received from the control unit 150, the image recognition unit 151 recognizes the ID code 211 included in the captured image, and transmits the recognized result to the device specification unit 152. The recognition of the ID code 211 may be performed using a known image recognition technique. The image recognition unit 151 may collectively recognize the plurality of ID codes 211.

The device specification unit 152 uniquely specifies the control device 210 with which the ID code 211 recognized by the image recognition unit 151 is associated. More specifically, the device specification unit 152 refers to the information stored in the storage unit 140 to specify the control device 210 associated with the ID code 211, and acquires the model information of the control device 210 and the information about the installation position of the control device 210 in the control panel 2. The device specification unit 152 specifies the model information and the installation positions for all the control devices 210 installed in the control panel 2, and further calculates a distance between two adjacent control devices 210 according to a positional relationship or the like of the ID codes 211 in the captured image. In other words, the device specification unit 152 specifies the installation position of each control device 210 by combining a plurality of captured images to recognize an overall configuration of the control panel 2, and calculates the distance between the control devices 210 at the same time. The device specification unit 152 transmits the acquired information to the heat generation prediction unit 153. Moreover, in the following description, the distance between the control devices 210 refers to a horizontal distance unless otherwise specified.

The heat generation prediction unit 153 predicts a heat generation state in the control panel 2 based on the model information and the installation position of the control device 210 specified by the device specification unit 152, and transmits the prediction result to the output control unit 154.

The prediction of the heat generation state is performed by, for example, the following method. The heat generation prediction unit 153 calculates a heat generation amount of the specific control device 210 when the control device 210 operates at the rated value. Furthermore, a heat generation amount when another control device 210 adjacent to the specific control device operates at the rated value is calculated. Then, the heat generation state in the specific control device 210 is predicted using a coefficient according to the distance between the specific control device 210 and another control device 210. Because heat is transferred upward via air or the like, some kind of correction may be performed on the heat generation state, for example, in consideration of a convection effect of air inside the control panel 2. In addition, an influence caused by heat generation of the adjacent control devices 210 may be predicted using the distance between the control devices 210, and the heat generation state may be corrected in consideration of the predicted influence.

The output control unit 154 uses the output unit 130 to output heat generation state information indicating the heat generation state predicted by the heat generation prediction unit 153. Specifically, the output control unit 154 outputs a message or the like according to the heat generation state in the control panel 2 predicted by the heat generation prediction unit 153. The output control unit 154 may generate and output, for example, a heat generation distribution map such as the measurement result of thermography of the heat generation state in the control panel 2. In addition, the output control unit 154 may output information of the control device 210 predicted to have a heat generation amount exceeding a predetermined value, or output information of the control device 210 of which the heat generation amount is relatively small and which is capable of shortening a distance to the control device 210 disposed adjacently. Furthermore, the output control unit 154 may output, for the control device 210 expected to have a heat generation amount exceeding a predetermined value, the model information of another control device 210 capable of replacing the control device 210. As another control device 210 capable of replacing the above control device 210, for example, a control device that is more power-saving, space-saving, and has a lower heat generation amount than the control device 210 to be replaced may be selected based on the model information.

### (Configuration of control panel)

The control panel 2 is an apparatus that has a plurality of control devices 210 installed therein according to the purpose and controls various electric devices. In the illustrated example, three control devices 210 are installed in the control panel 2, and each control device 210 is equipped with the ID code 211. Moreover, the three control devices 210 may be the same model or different models, but the three ID codes 211 must be different from each other. The control panel 2 may have a configuration in which a housing includes a plurality of rails (partial accommodation regions) and the control device 210 can be installed by fixing the control device 210 to the rail. In other words, the control panel 2 may be configured to include a plurality of partial accommodation regions each of which accommodates a plurality of control devices 210.

The control device 210 is an electronic device installed inside the control panel 2. The control device 210 may be, for example, a CPU unit of a programmable logic controller (PLC), a communication coupler unit, an input unit that inputs a sensing result from a sensor, or a control output unit that controls a motor, a robot, or the like. The control device 210 may have any size or orientation as long as the control device 210 can be accommodated in the above-described partial accommodation region. In the following description, the control device 210 is preferably fixed to be horizontally movable along the rail in the housing of the control panel 2. That is, when the plurality of control devices 210 is arranged along one rail, the distance between the control devices 210 may be changed by moving the control devices 210 along the rail.

The ID code 211 is a device identification image capable of uniquely specifying the control device 210, and one ID code 211 is associated with one control device 210. The ID code 211 may be in the form of a two-dimensional code arranged on the control device 210. There is no limitation on the installation location of the ID code 211, but the ID code 211 is preferably arranged at a position where the ID codes 211 of all the control devices 210 installed in the control panel 2 can be confirmed at the same time when the entire control panel 2 is imaged. The ID code 211 is preferably arranged with a fixed size regardless of the size of the control device 210.

### (About method of calculating distance between control devices)

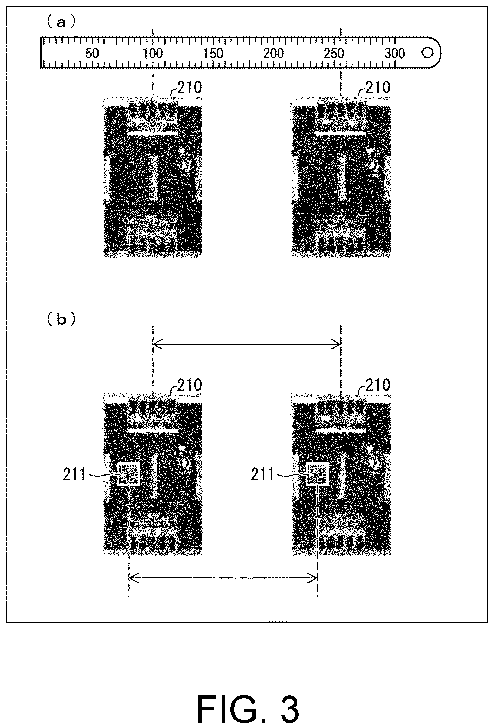

A method of calculating the distance between the control devices in the information processing apparatus 1 according to the embodiment is described with reference to FIG. 3. FIG. 3 is a schematic diagram showing an example of a method in which the information processing apparatus 1 calculates the distance between the control devices 210, wherein (a) of FIG. 3 shows an example of using a scale to calculate the distance, and (b) of FIG. 3 shows an example of using a captured image, model information and the like to calculate the distance.

In (a) of FIG. 3, regarding the distance between two control devices 210, the scale is used to calculate an axial distance between the vertical center axes of the control devices 210 as the distance between the control devices. Because this calculation method requires a scale, it is difficult to apply the calculation method to a complicated place or the like.

In (b) of FIG. 3, regarding two adjacent control devices 210 included in one captured image, the distance between the ID codes 211 arranged on the control devices 210 is calculated as the distance between the control devices. Alternatively, an external feature such as a hole of a terminal block included in the control device 210 is used instead of the ID code 211 to calculate the distance between the control devices. With this calculation method, the dimension of the control device 210 can be acquired from the model information, and the distance can be calculated from the scale in the captured image. In addition, it is considered that if the position where the ID code 211 is arranged is fixed, the distance between the ID codes 211 is equal to the distance between the control devices, and thus the distance may be calculated using the ID code 211.

### (Calculation of distance based on orientation or size of control device)

In the information processing apparatus 1 according to the embodiment, calculation of the distance based on the orientation or size of the control device 210 is described with reference to FIG. 4. FIG. 4 is a schematic diagram showing an example in which the information processing apparatus 1 defines the distance between the control devices 210 when the orientations of the ID codes 211 or the sizes of the devices are different between the two adjacent control devices 210. (a) of FIG. 4 shows an example in which a distance between facing surfaces when one of the two adjacent control devices 210 rotates by 90 degrees with respect to the other control device is set as the distance between the two control devices 210. (b) of FIG. 4 shows an example in which a distance between facing surfaces when one of the two adjacent control devices 210 rotates by 180 degrees with respect to the other control device is set as the distance between the two control devices 210. (c) of FIG. 4 shows that two control devices 210 used for measuring the distance can be arbitrarily selected when one small control device 210 exists between two large control devices 210.

(a) of FIG. 4 shows an example in which another control device 210 adjacent to one control device 210 is installed in a state of rotating by 90 degrees with respect to the one control device 210. In this case, the distance between the two control devices 210 is defined as the distance between the facing surfaces. At this time, the distance between the facing surfaces is calculated, for example, by the image recognition unit 151 recognizing the ID codes 211 and recognizing the orientation of the recognized ID codes 211 at the same time. That is, when the image recognition unit 151 recognizes the orientation of the ID codes 211 and the device specification unit 152 specifies the control devices 210, the facing surfaces of the control devices 210 can be specified by specifying the installation direction of the control devices 210 according to the orientation of the ID codes 211. Then, if the dimension of the control device 210 can be acquired from the model information and the distance from the ID code 211 to the facing surface can be grasped from the scale in the captured image, the distance between the facing surfaces can be calculated. Moreover, although the example in which the image recognition unit 151 recognizes the orientation of the ID code 211 is used in the above description, for example, the image recognition unit 151 may recognize the installation direction of the control device 210 from the external feature of the control device 210. Moreover, in order for the image recognition unit 151 to recognize the installation direction of the control device 210 from the captured image of the control panel 2, it is necessary to first recognize the top and bottom in the captured image and then recognize the orientation or the like of the ID code 211 with respect to the recognized top and bottom. Therefore, for example, when the image of the control panel 2 is captured, the orientation of the camera 110 may be designated, or information indicating the orientation of the camera 110 during image capturing may be added to the captured image by using a direction sensor or the like not shown. In addition, when the captured image includes a plurality of ID codes 211, a mounting direction of the rail may be recognized based on the interval or direction in which the ID codes 211 are arranged, and the top and bottom may be recognized from the mounting direction of the rail.

(b) of FIG. 4 shows an example in which another control device 210 adjacent to one control device 210 is installed in a state of rotating by 180 degrees with respect to the one control device 210. In this case, the distance between the two control devices 210 can be calculated by the same method as in (a) of FIG. 4.

(c) of FIG. 4 shows a case in which one small control device 210 exists between two large control devices 210. In this case, the device specification unit 152 may not only calculate the distance between the large control device 210 and the small control device 210, but may further calculate the distance between the two large control devices 210. In other words, the device specification unit 152 acquires the respective dimensions of two adjacent control devices 210 from the model information, and determines whether the dimension of at least one control device 210 is less than or equal to a predetermined value. When there is a control device 210 having a dimension less than or equal to a predetermined value, the device specification unit 152 calculates, as the distance between the control devices, a distance between the other control device 210 and another control device 210 on the other side of the control device 210 having a dimension less than or equal to a predetermined value.

### (Flow of processing)

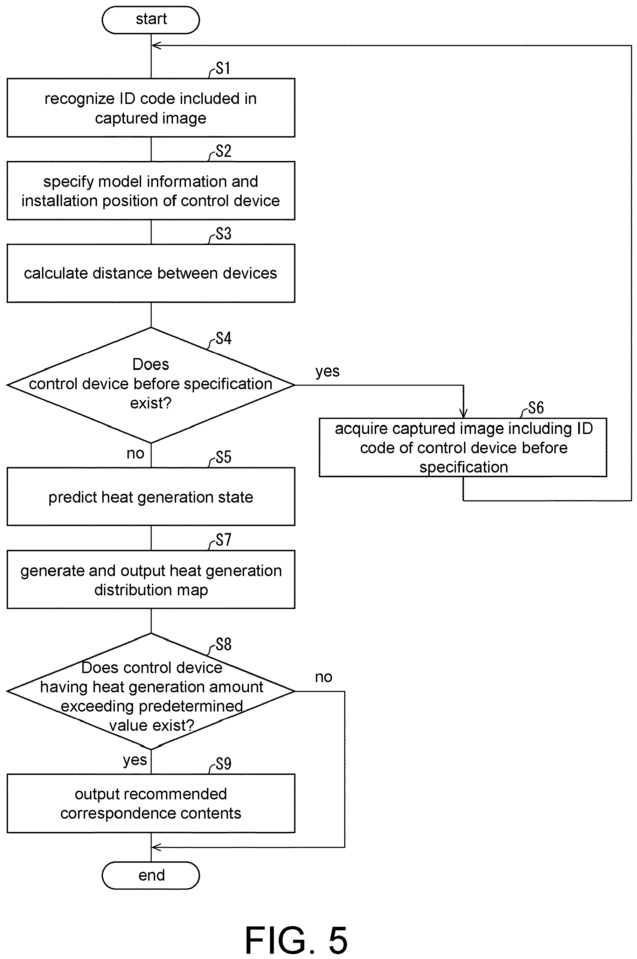

A flow of processing executed by the information processing apparatus 1 according to the embodiment is described with reference to FIG. 5. FIG. 5 is a flowchart showing an example of the flow of the processing executed by the information processing apparatus 1.

First, when the captured image is acquired, the image recognition unit 151 recognizes the ID code 211 included in the captured image, and transmits the recognition result to the device specification unit 152 (S1: image recognition step). Next, the device specification unit 152 specifies the control device 210 associated with the ID code 211 included in the received recognition result and the model information of the control device 210. The device specification unit 152 further specifies the installation position of the control device 210 specified with reference to the layout information of the control panel 2 (S2: device specification step). After that, the device specification unit 152 calculates the distance between two adjacent control devices 210 by the method described with reference to FIGS. 3 and 4 (S3).

After S3, the device specification unit 152 refers to the layout information of the control panel 2 and determines whether the control device 210 before specification exists (S4). When it is determined that the control device 210 before specification does not exist (NO in S4), the heat generation prediction unit 153 predicts a heat generation amount of each control device 210 from the model information. The heat generation prediction unit 153 further generates heat generation state information obtained by predicting the heat generation state of the entire control panel 2 in consideration of the installation position or the like in the control panel 2 (S5: heat generation prediction step). Then, the processing proceeds to S7. On the other hand, when it is determined that the control device 210 before specification exists (YES in S4), the control unit 150 uses the camera 110 to acquire a captured image including the ID code 211 of the control device 210 before specification (S6). After that, the processing proceeds to S1, and the processing of S1 to S4 is executed again.

In S7, the output control unit 154 generates a heat generation distribution map from the heat generation state information generated by the heat generation prediction unit 153 in S5, and uses the output unit 130 to outputs the heat generation distribution map (S7: output control step). Furthermore, the output control unit 154 determines whether the control device 210 predicted to have a heat generation amount exceeding a predetermined value exists based on the heat generation state information (S8). When it is determined that the control device 210 predicted to have a heat generation amount exceeding a predetermined value exists (YES in S8), the output control unit 154 uses the output unit 130 to output recommended correspondence contents such as a change in the distance to another control device 210 adjacent to the above control device 210 or a replacement of the above control device 210 (S9). On the other hand, when it is determined in S8 that the control device 210 predicted to have a heat generation amount exceeding a predetermined value does not exist (NO in S8), the series of processing ends.

By the above processing, the information processing apparatus 1 according to the embodiment can specify the models, installation positions, or the like of the plurality of control devices 210 installed in the control panel 2 from the captured image, and further output the recommended correspondence contents for the control device 210 predicted to have a heat generation amount exceeding a predetermined value.

The heat generation state in the control panel 2 predicted by the heat generation prediction unit 153 in the embodiment may be corrected according to, for example, the altitude of the location at which the control panel 2 is arranged. For example, when the ID code 211 includes GPS information of the control device 210 in addition to the model information and the installation position information of the control device 210, the device specification unit 152 may specify, for the ID code 211 recognized by the image recognition unit 151, the model information, the ground contact point, and the GPS information of the control device 210 which is associated with the ID code 211. Because the atmospheric pressure changes according to the altitude, when the control panel 2 is installed in a highland for example, the heat-propagating air is thinner than in a lowland, and thus the heat generation amount of the control device 210 substantially increases. By using the GPS information in prediction of the heat generation state, more accurate prediction can be made. Moreover, the heat generation prediction unit 153 may predict the heat generation state from the GPS information by using not only the altitude but also temperature information or temperature prediction of a region in which the control panel 2 is arranged.

### §3 Variation example

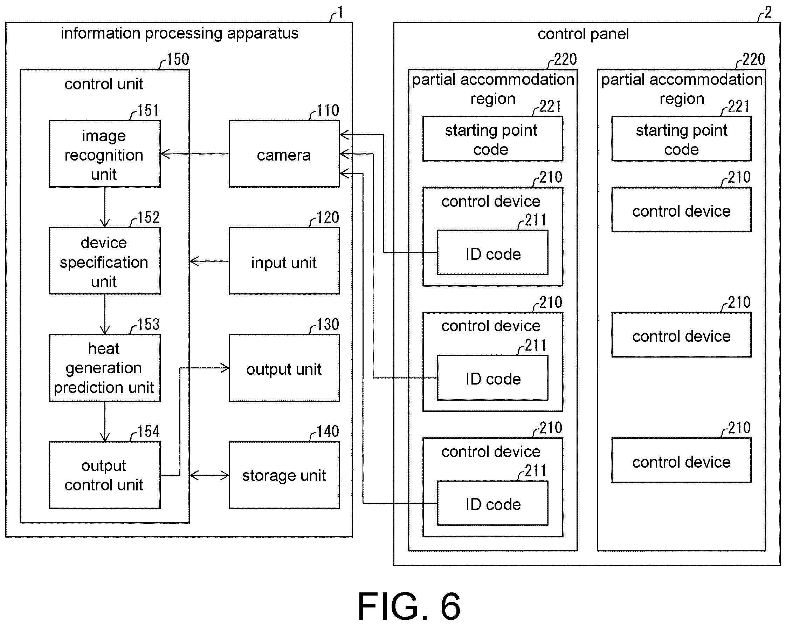

Hereinafter, an embodiment of the present invention is described in detail with reference to FIGS. 6 to 8.

### (Configuration of information processing apparatus)

The configuration of the information processing apparatus 1 according to the embodiment is described with reference to FIG. 6. FIG. 6 is a block diagram showing an example of the main configuration of the information processing apparatus 1.

The basic configuration of the information processing apparatus 1 is the same as in the above configuration example, but a part of the configuration is different. In the variation example, the image recognition unit 151 can recognize a starting point code 221 arranged for each partial accommodation region 220 in the control panel 2. In addition, the device specification unit 152 can specify the partial accommodation region 220 associated with the starting point code 221 from the starting point code 221 recognized by the image recognition unit 151. The device specification unit 152 can specify the model information, the installation position, or the like of the control device 210 for each partial accommodation region 220.

### (Configuration of control panel)

The basic configuration of the control panel 2 is the same as in the above configuration example, but a part of the configuration is different. In the variation example, the control panel 2 is equipped with the control device 210 for each partial accommodation region 220, and the starting point code 221 capable of uniquely identifying the partial accommodation region 220 is arranged in each partial accommodation region 220.

The partial accommodation region 220 is a specific region in which a plurality of control devices 210 is installed and which is uniquely identified by the starting point code 221. Although the partial accommodation region 220 may be set in any way, for example, the rail arranged in the housing of the control panel 2 may be associated with the partial accommodation region 220. That is, the plurality of control devices 210 installed in one rail may be treated as the control devices 210 accommodated in one partial accommodation region.

The starting point code 221 is an image arranged at a predetermined location of the partial accommodation region 220 and used to uniquely identify the partial accommodation region 220, and functions as an accommodation region identification image. The starting point code 221 may be represented by a two-dimensional code similar to the ID code 211.

### (Specific example of partial accommodation region)

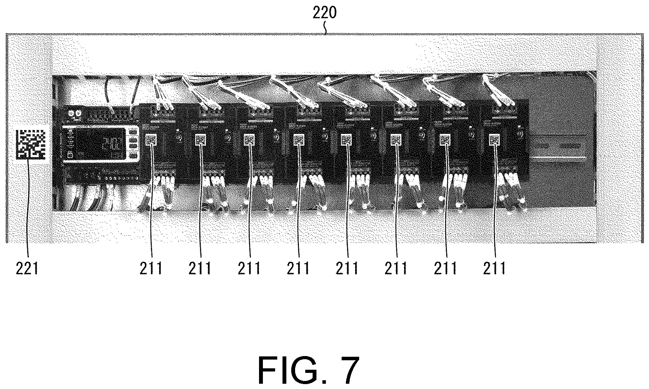

A specific example of the partial accommodation region 220 according to the variation example is described with reference to FIG. 7. FIG. 7 is a schematic diagram showing an example of the partial accommodation region 220 included in the control panel 2 in the variation example. In the illustrated example, the starting point code 221 is arranged at the left end of the partial accommodation region 220, and a plurality of control devices 210 is installed on the right side of the starting point code 221. When the starting point code 221 is first recognized, the information processing apparatus 1 according to the variation example acquires, from the layout information of the control panel 2, the partial accommodation region 220 corresponding to the starting point code 221 and the model information or the like of the control device 210 accommodated in the partial accommodation region 220. Thereafter, the information processing apparatus 1 can specify the control device 210 accommodated in the partial accommodation region 220 by recognizing the ID code 211 of the control device 210. In other words, the information processing apparatus 1 can acquire the model information or the like of the control device 210 as information about each partial accommodation region 220 from the starting point code 221, and use the information to specify the control device 210 accommodated in the partial accommodation region 220 from the ID code 211 included in the captured image. The information processing apparatus 1 can specify all the control devices 210 installed in the control panel 2 by performing the same processing for all the partial accommodation regions 220 included in the control panel 2, and predict the heat generation state.

### (Flow of processing)

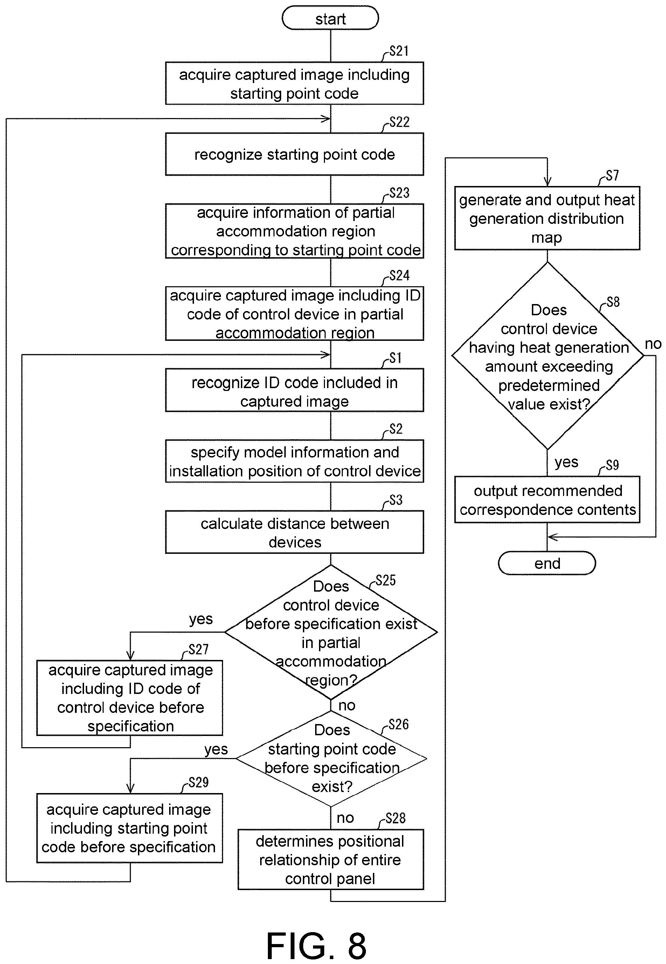

A flow of processing executed by the information processing apparatus 1 according to the variation example is described with reference to FIG. 8. FIG. 8 is a flowchart showing an example of the flow of the processing executed by the information processing apparatus 1.

First, the control unit 150 uses the camera 110 to acquire a captured image including the starting point code 221 (S21). After that, the image recognition unit 151 recognizes the starting point code 221 included in the captured image, and transmits the recognition result to the device specification unit 152 (S22). The device specification unit 152 specifies the partial accommodation region 220 associated with the starting point code 221 included in the recognition result, and acquires the layout information or the like of the partial accommodation region 220 (S23). After S23, the control unit 150 uses the camera 110 to acquire a captured image including the ID code 211 of the control device 210 accommodated in the partial accommodation region 220 (S24).

After S24, the information processing apparatus 1 executes the same processing as S1 to S3 in FIG. 5, and the device specification unit 152 determines whether the control device 210 before specification exists among the control devices 210 accommodated in the partial accommodation region 220 specified in S23 (S25). When it is determined that the control device 210 before specification does not exist (NO in S25), the device specification unit 152 further determines whether the starting point code 221 before specification exists from the layout information of the control panel 2 (S26). On the other hand, when it is determined in S25 that the control device 210 before specification exists (YES in S25), the control unit 150 uses the camera 110 to acquire a captured image including the ID code 211 of the control device 210 before specification (S27). After that, the processing proceeds to S1, and the processing of S 1 to S3 and S25 is executed again.

When it is determined in S26 that the starting point code 221 before specification does not exist (NO in S26), the device specification unit 152 determines a positional relationship of the entire control panel 2 (S28). After that, the processing proceeds to S7, the processing of S7 to S9 is executed as in the above configuration example, and then the series of processing is ended. On the other hand, when it is determined in S26 that the starting point code 221 before specification exists (YES in S26), the control unit 150 uses the camera 110 to acquire a captured image including the starting point code 221 before specification (S29). After that, the processing proceeds to S22, and the processing of S22 to S24, S1 to S3, and S25 to S26 is executed again.

By the above processing, similar to the configuration example, the information processing apparatus 1 according to the variation example can specify the models, installation positions or the like of the plurality of control devices 210 installed in the control panel 2 from the captured image, and further output the recommended correspondence contents for the control device 210 predicted to have a heat generation amount exceeding a predetermined value.

In the variation example, the starting point code 221 may further include not only information for identifying the partial accommodation region 220 but also information about the depth of the control panel 2 for example. In other words, the starting point code 221 may include information about the volumes of the partial accommodation region 220 and the control panel 2. In this case, the output control unit 154 may calculate the volume of the empty region of the partial accommodation region 220 by using the volume of the partial accommodation region 220 that is specified by the device specification unit 152 using the starting point code 221 and the volume of the control device 210 that is specified using the ID code 211. Then, for example, the heat generation amount may be predicted in consideration of the volume of the empty region, and the adjustment amount of the distance between the control devices may be determined at the same time.

Furthermore, in the variation example, the partial accommodation region 220 that does not have the starting point code 221 may exist. In this case, for example, similar to the above configuration example, the image recognition unit 151 may recognize the ID code 211 from the captured image and the device specification unit 152 may specify the partial accommodation region 220 that accommodates the control device 210 associated with the ID code 211 from the layout information of the control panel 2. That is, the device specification unit may specify the model information and the installation position of the specific control device 210 based on the ID code 211, and further specify the partial accommodation region 220 in which the specific control device 210 is accommodated. In addition, when the starting point code 221 is not included, the information about the depth of the control panel 2 may be stored in the storage unit 140 together with the layout information or the like. The information about the depth of the control panel 2 may be, for example, information registered in the information processing apparatus 1 by the user using the input unit 120.

### [Implementation example using software]

Control blocks (particularly, the image recognition unit 151, the device specification unit 152, the heat generation prediction unit 153, and the output control unit 154) of the information processing apparatus 1 may be implemented by a logic circuit (hardware) formed in an integrated circuit (IC chip) or the like, or may be implemented by software.

In the latter case, the information processing apparatus 1 includes a computer that executes commands of a program which is software for implementing each function. The computer includes, for example, one or more processors and a computer-readable recording medium in which the above program is stored. Besides, the processor reads the program from the recording medium and executes the program in the computer, thereby achieving the object of the present invention. For example, a central processing unit (CPU) can be used as the processor. In addition to a "non-transitory tangible media" such as a read only memory (ROM), a tape, a disk, a card, a semiconductor memory, a programmable logic circuit and the like can be used as the above recording medium. In addition, a random access memory (RAM) or the like for expanding the program may be further included. In addition, the program may be supplied to the computer via an optional transmission medium (a communication network, a broadcast wave or the like) capable of transmitting the program. Moreover, one aspect of the present invention can also be implemented in a form of a data signal which is embedded in a carrier wave and in which the program is embodied by electronic transmission.

The present invention is not limited to the above-described embodiments, and various changes can be made in the scope shown by the claims. Embodiments obtained by appropriately combining technical parts respectively disclosed in different embodiments are also included in the technical scope of the present invention.

[Summary]

According to the configuration of claim 1, the information processing apparatus outputs the heat generation state of the control device equipped with the device identification image in the control panel by recognizing the device identification image. Thereby, for example, it is possible to determine a control device having an unsuitable heat generation state. Thus, it is possible to provide an information processing apparatus, which is capable of determining whether the control device installed in the control panel should be replaced from the prediction of the heat generation state and which presents information for determining whether the installation state of the control device is appropriate.

In the information processing apparatus according to the above aspect, the device specification unit uniquely specifies the control device from the device identification image included in the captured image by using the device identification information that associates each of the control devices with the device identification image.

According to the above configuration, the information processing apparatus outputs the heat generation distribution map in the control panel by recognizing the device identification image. By outputting the heat generation distribution map, it is possible to confirm whether the heat generation state for the entire control panel is appropriate. Furthermore, for example, an improvement plan of the heat generation state can be made using the heat generation distribution map.

According to the configuration of claim 3, the information processing apparatus can determine whether the heat generation amount of the control device exceeds a predetermined value based on the model information and the installation position of the control device, and output the information of the control device when it is determined that the heat generation amount of the control device exceeds a predetermined value. Thereby, for example, it is possible to consider a countermeasure such as an arrangement for moving or replacing the control device from which the information is output.

According to the configuration of claim 4, the information processing apparatus can combine the partial captured images of the control panel to recognize the overall configuration of the control panel, and predict and output the heat generation state in the control panel.

According to the configuration of claim 5, the information processing apparatus can output the heat generation state of the control device by using the installation position of the control device specified by recognizing the accommodation region identification image and the device identification image. Thereby, for example, even if the captured image cannot specify the positional relationship between the partial accommodation regions, the installation position of the partial accommodation region and the installation position of the control device accommodated in the partial accommodation region can be specified by recognizing the accommodation region identification image.

According to the configuration of claim 7, the information processing apparatus can specify, using the device identification image, the partial accommodation region in which the control device associated with the device identification image is accommodated. Thereby, for example, even for the partial accommodation region in which the accommodation region identification image is not arranged, the installation position of the partial accommodation region and the installation position of the control device accommodated in the partial accommodation region can be specified.

According to the configuration of claim 8, the information processing apparatus can use the accommodation region identification image and the device identification image to specify the volume of the empty region (gap) in the control panel. Thereby, for example, a control device that fits in the volume of the empty region (gap) can be selected in advance.

According to the configuration of claim 9, the information processing apparatus can output the information of the control device which may shorten the distance between the adjacent control devices. Thereby, for example, based on the output information, the distance between the control devices can be adjusted so as to suppress the location at which excessive heat is generated in the control panel. In addition, because the distance between the control devices can be adjusted to be no more than necessary, the utilization efficiency in the internal space of the control panel can be improved.

According to the configuration of claim 10, the information processing apparatus can output the model information of another control device capable of replacing the control device for which the heat generation amount is determined to exceed a predetermined value. Thereby thereby, for example, it is possible to suppress the location at which excessive heat is generated in the control panel by exchanging the control device with another control device from which information is output.

According to the configuration of claim 11, the information processing apparatus can specify the orientation of the control device from the orientation of the recognized device identification image. Thereby, it is possible to more accurately grasp the distance between the control device and another control device adjacent to the control device according to the orientation of the control device.

### [Reference Signs List]

- 1: information processing apparatus
- 110: camera
- 120: input unit
- 130: output unit
- 140: storage unit
- 150: control unit
- 151: image recognition unit
- 152: device specification unit
- 153: heat generation prediction unit
- 154: output control unit
- 2: control panel
- 210: control device
- 211: ID code (device identification image)
- 220: partial accommodation region
- 221: starting point code (accommodation region identification image)

## Claims

1. An information processing apparatus (1), comprising:
an image recognition unit (151) adapted to acquire a captured image of a control panel (2) equipped with a plurality of control devices (210) in which device identification images (211) indicating model information are arranged, and to recognize the device identification images (211) comprised in the captured image;
a device specification unit (152) adapted to specify the model information and installation positions of the control devices (210) based on the device identification images (211) which are recognized by the image recognition unit (151);
a heat generation prediction unit (153) adapted to predict a heat generation state in the control panel (2) based on the model information and the installation positions of the control devices (210) which are specified by the device specification unit (152); and
an output control unit (154) adapted to output heat generation state information which is predicted by the heat generation prediction unit (153), the information processing apparatus (1) being **characterized in that**
the output control unit (154) is adapted to generate and output a heat generation distribution map in the control panel (2) based on the heat generation state information.

2. The information processing apparatus (1) according to claim 1, wherein the device specification unit (152) is adapted to uniquely specify a control device (210) from the device identification images (211) comprised in the captured image by using device identification information that associates the control devices (210) with the device identification images (211).

3. The information processing apparatus (1) according to any one of claims 1 to 2, wherein the output control unit (154) is adapted to output information of the control device (210) predicted to have a heat generation amount exceeding a predetermined value based on the heat generation state information.

4. The information processing apparatus (1) according to any one of claims 1 to 3, wherein the captured image is a partial captured image of the control panel (2), and
the device specification unit (152) is adapted to specify the installation positions of the control devices (210) by combining a plurality of the captured images to recognize an overall configuration of the control panel (2).

5. The information processing apparatus (1) according to any one of claims 1 to 4, wherein the control panel (2) comprises a plurality of partial accommodation regions (220) each of which accommodates a plurality of control devices (210), an accommodation region identification image (221) for specifying each partial accommodation region (220) arranged at a predetermined location of the partial accommodation region (220), and
the device specification unit (152) is adapted to specify the installation positions of the control devices (210) based on a positional relationship between the accommodation region identification images (221) and the device identification images (211).

6. The information processing apparatus (1) according to claim 5, wherein information about the partial accommodation regions (220) is acquired from the accommodation region identification images (221), and the information is used to specify a control device (210) from the device identification images (211) comprised in the captured image.

7. The information processing apparatus (1) according to any one of claims 1 to 6, wherein the control panel (2) comprises a plurality of partial accommodation regions (220) each of which accommodates a plurality of control devices (210), and
the device specification unit (152) is adapted to specify the model information and the installation position of a specific control device (210) based on the device identification images (211), and to further specify the partial accommodation region (220) in which the specific control device (210) is accommodated.

8. The information processing apparatus (1) according to claim 5 or 6, wherein the device specification unit (152) is adapted to specify the volume of the control panel (2) based on the accommodation region identification images (221), specify the volume of the control devices (210) based on the device identification image (211), and to use the volume of the control panel (2) and the volume of the control devices (210) to specify the volume of an empty region in the control panel (2).

9. The information processing apparatus (1) according to any one of claims 1 to 8, wherein the output control unit (154) is adapted to output, based on the heat generation state information, information of the control device (210) capable of shortening a distance between adjacently-arranged control devices (210) among the control devices (210).

10. The information processing apparatus (1) according to claim 3, wherein the output control unit (154) is adapted to output model information of a control device (210) capable of replacing the control device (210) predicted to have a heat generation amount exceeding a predetermined value.

11. The information processing apparatus (1) according to any one of claims 1 to 10, wherein the device specification unit (152) is adapted to specify the installation direction of each control device (210) based on the orientation of the device identification image (211) recognized by the image recognition unit (151).

12. The information processing apparatus (1) according to claim 11, wherein the device specification unit (152) is adapted to use the model information, the installation position, and the installation direction of each control device (210) to calculate the distance between the control devices (210).

13. The information processing apparatus (1) according to claim 12, wherein the device specification unit (152) is adapted to set a distance between two adjacent device identification images (211) or a distance between appearance features of the two adjacent device identification images (211) as the distance between two adjacent control devices (210), to acquire the dimension of each control device (210) from the model information, and to calculate the distance between the control devices (210) according to a scale in the captured image.

14. The information processing apparatus (1) according to claim 12, wherein the device specification unit (152) is adapted to specify facing surfaces by specifying the installation directions of two adjacent control devices (210) according to the orientations of the device identification images (211), and to calculate the distance between the control devices (210) according to the dimension of each control device (210) acquired from the model information and the scale in the captured image.

15. The information processing apparatus (1) according to any one of claims 12 to 14, wherein the device specification unit (152) is adapted to acquire the respective dimensions of two adjacent control devices (210) from the model information and calculates, when the dimension of at least one control device (210) is less than or equal to a predetermined value, a distance between the other control device (210) and another control device (210) on the other side of the one control device (210) as the distance between the control devices (210).

16. The information processing apparatus (1) according to any one of claims 12 to 15, wherein the heat generation prediction unit (153) is adapted to use the distance between the control devices (210) to predict an influence caused by heat generation of the adjacent control devices (210), and to predict the heat generation state in the control panel (2) in consideration of the predicted influence.

17. The information processing apparatus (1) according to any one of claims 1 to 16, wherein the device specification unit (152) is adapted to specify an altitude of the location at which the control panel (2) equipped with the plurality of control devices (210) is arranged, and
the heat generation prediction unit (153) is adapted to perform correction according to the altitude to predict the heat generation state.

18. An information processing method, comprising:
an image recognition step (S1) of acquiring a captured image of a control panel (2) equipped with a plurality of control devices (210) in which device identification images (211) indicating model information are arranged, and recognizing the device identification images (211) comprised in the captured image;
a device specification step (S2) of specifying the model information and installation positions of the control devices (210) based on the device identification images (211) which are recognized by the image recognition step (S1);
a heat generation prediction step (S5) of predicting a heat generation state in the control panel (2) based on the model information and the installation positions of the control devices (210) which are specified by the device specification step (S2); and
an output control step (S7) of outputting heat generation state information which is predicted by the heat generation prediction step (S5), the information processing method being **characterized in that**
the output control step (S7) generates and outputs a heat generation distribution map in the control panel (2) based on the heat generation state information.

19. An information processing program **characterised by** causing a computer to function as the information processing apparatus (1) according to any one of claims 1 to 17 and causing the computer to function as each of the units.

## Patentansprüche

1. Informationsverarbeitungsvorrichtung (1), umfassend:
eine Bilderkennungseinheit (151), die angepasst ist, um ein aufgenommenes Bild eines Steuerfelds (2) zu erfassen, das mit einer Vielzahl von Steuervorrichtungen (210) ausgestattet ist, in denen Vorrichtungsidentifikationsbilder (211), die Modellinformationen anzeigen, angeordnet sind, und um die Vorrichtungsidentifikationsbilder (211) zu erkennen, die in dem aufgenommenen Bild umfasst sind;
eine Vorrichtungsspezifikationseinheit (152), die angepasst ist, um die Modellinformationen und Installationspositionen der Steuervorrichtungen (210) basierend auf den Vorrichtungsidentifikationsbildern (211) zu spezifizieren, die durch die Bilderkennungseinheit (151) erkannt werden;
eine Wärmeerzeugungsvorhersageeinheit (153), die angepasst ist, um einen Wärmeerzeugungszustand in dem Steuerfeld (2) basierend auf den Modellinformationen und den Installationspositionen der Steuervorrichtungen (210), die durch die Vorrichtungsspezifikationseinheit (152) spezifiziert sind, vorherzusagen; und
eine Ausgabesteuereinheit (154), die angepasst ist, um eine Wärmeerzeugungszustandsinformation auszugeben, die durch die Wärmeerzeugungsvorhersageeinheit (153) vorhergesagt wird, wobei die Informationsverarbeitungsvorrichtung (1) **dadurch gekennzeichnet ist, dass**
die Ausgabesteuereinheit (154) angepasst ist, um eine Wärmeerzeugungsverteilungskarte in dem Steuerfeld (2) basierend auf der Wärmeerzeugungszustandsinformation zu erzeugen und auszugeben.

2. Informationsverarbeitungsvorrichtung (1) gemäß Anspruch 1, wobei die Vorrichtungsspezifikationseinheit (152) angepasst ist, eine Steuervorrichtung (210) aus den Vorrichtungsidentifikationsbildern (211), umfasst in dem aufgenommenen Bild, eindeutig zu spezifizieren, unter Verwendung der Vorrichtungsidentifikationsinformationen, die die Steuervorrichtungen (210) mit den Vorrichtungsidentifikationsbildern (211) assoziieren.

3. Informationsverarbeitungsvorrichtung (1) gemäß einem der Ansprüche 1 bis 2, wobei die Ausgabesteuerungseinheit (154) angepasst ist, um Informationen der Steuervorrichtung (210) auszugeben, vorhergesagt, dass sie eine Wärmeerzeugungsmenge aufweist, die einen vorbestimmten Wert basierend auf den Wärmeerzeugungszustandsinformationen überschreitet.

4. Informationsverarbeitungsvorrichtung (1) gemäß einem der Ansprüche 1 bis 3, wobei das aufgenommene Bild ein teilweise aufgenommenes Bild des Steuerfelds (2) ist, und
die Vorrichtungsspezifikationseinheit (152) angepasst ist, die Installationspositionen der Steuervorrichtungen (210) durch Kombinieren einer Vielzahl der aufgenommenen Bilder zu spezifizieren, um eine Gesamtkonfiguration des Steuerfelds (2) zu erkennen.

5. Informationsverarbeitungsvorrichtung (1) gemäß einem der Ansprüche 1 bis 4, wobei das Steuerfeld (2) eine Vielzahl von Teilaufnahmebereichen (220) umfasst, von denen jeder eine Vielzahl von Steuervorrichtungen (210) aufnimmt, ein Aufnahmebereichs-Identifikationsbild (221) zum Spezifizieren jedes Teilaufnahmebereichs (220), angeordnet an einer vorbestimmten Stelle des Teilaufnahmebereichs (220), und
die Vorrichtungsspezifikationseinheit (152) angepasst ist, um die Installationspositionen der Steuervorrichtungen (210) basierend auf einer Positionsbeziehung zwischen den Aufnahmebereichsidentifikationsbildern (221) und den Vorrichtungsidentifikationsbildern (211) zu spezifizieren.

6. Informationsverarbeitungsvorrichtung (1) gemäß Anspruch 5, wobei Informationen über die Teilaufnahmebereiche (220) aus den Aufnahmebereichs-Identifikationsbildern (221) gewonnen werden und die Informationen verwendet werden, um eine Steuervorrichtung (210) aus den Vorrichtungsidentifikationsbildern (211), umfasst in dem aufgenommenen Bild, zu spezifizieren.

7. Informationsverarbeitungsvorrichtung (1) gemäß einem der Ansprüche 1 bis 6, wobei das Steuerfeld (2) eine Vielzahl von Teilaufnahmebereichen (220) umfasst, von denen jeder eine Vielzahl von Steuervorrichtungen (210) aufnimmt, und
die Vorrichtungsspezifikationseinheit (152) angepasst ist, die Modellinformationen und die Installationsposition einer spezifischen Steuervorrichtung (210) basierend auf den Vorrichtungsidentifikationsbilder (211) zu spezifizieren, und ferner den Teilaufnahmebereich (220) zu spezifizieren, in dem die spezifische Steuervorrichtung (210) aufgenommen ist.

8. Informationsverarbeitungsvorrichtung (1) gemäß Anspruch 5 oder 6, wobei die Vorrichtungsspezifikationseinheit (152) angepasst ist, das Volumen des Steuerfelds (2) basierend auf den Aufnahmebereich-Identifikationsbildern (221) zu spezifizieren, das Volumen der Steuervorrichtungen (210) basierend auf dem Vorrichtungsidentifikationsbild (211) zu spezifizieren und das Volumen des Steuerfelds (2) und das Volumen der Steuervorrichtungen (210) zu verwenden, um das Volumen eines leeren Bereichs in dem Steuerfeld (2) zu spezifizieren.

9. Informationsverarbeitungsvorrichtung (1) gemäß einem der Ansprüche 1 bis 8, wobei die Ausgabesteuerungseinheit (154) angepasst ist, basierend auf den Wärmeerzeugungszustandsinformationen, Informationen der Steuervorrichtung (210) auszugeben, die in der Lage sind, einen Abstand zwischen benachbart angeordneten Steuervorrichtungen (210) unter den Steuervorrichtungen (210) zu verkürzen.

10. Informationsverarbeitungsvorrichtung (1) gemäß Anspruch 3, wobei die Ausgabesteuereinheit (154) angepasst ist, um Modellinformationen einer Steuervorrichtung (210) auszugeben, die in der Lage ist, die Steuervorrichtung (210) zu ersetzen, von der vorhergesagt wird, dass sie eine Wärmeerzeugungsmenge aufweist, die einen vorbestimmten Wert überschreitet.

11. Informationsverarbeitungsvorrichtung (1) gemäß einem der Ansprüche 1 bis 10, wobei die Vorrichtungsspezifikationseinheit (152) angepasst ist, die Installationsrichtung jeder Steuervorrichtung (210) basierend auf der Ausrichtung des Vorrichtungsidentifikationsbildes (211) zu spezifizieren, erkannt von der Bilderkennungseinheit (151).

12. Informationsverarbeitungsvorrichtung (1) gemäß Anspruch 11, wobei die Vorrichtungsspezifizierungseinheit (152) angepasst ist, die Modellinformationen, die Installationsposition und die Installationsrichtung jeder Steuervorrichtung (210) zu verwenden, um den Abstand zwischen den Steuervorrichtungen (210) zu berechnen.

13. Informationsverarbeitungsvorrichtung (1) gemäß Anspruch 12, wobei die Vorrichtungsspezifikationseinheit (152) angepasst ist, einen Abstand zwischen zwei benachbarten Vorrichtungsidentifikationsbildern (211) oder einen Abstand zwischen Erscheinungsmerkmalen der zwei benachbarten Vorrichtungsidentifikationsbilder (211) als den Abstand zwischen zwei benachbarten Steuervorrichtungen (210) zu spezifizieren, um die Abmessung jeder Steuervorrichtung (210) aus den Modellinformationen zu erfassen und um den Abstand zwischen den Steuervorrichtungen (210) gemäß einem Maßstab in dem erfassten Bild zu berechnen.

14. Informationsverarbeitungsvorrichtung (1) gemäß Anspruch 12, wobei die Vorrichtungsspezifikationseinheit (152) angepasst ist, einander zugewandte Flächen zu spezifizieren, durch Spezifizieren der Installationsrichtungen von zwei benachbarten Steuervorrichtungen (210) gemäß den Ausrichtungen der Vorrichtungsidentifikationsbilder (211) spezifiziert, und um den Abstand zwischen den Steuervorrichtungen (210) gemäß der Abmessung jeder Steuervorrichtung (210), die aus den Modellinformationen und dem Maßstab in dem aufgenommenen Bild erfasst wurde, zu berechnen.

15. Informationsverarbeitungsvorrichtung (1) gemäß einem der Ansprüche 12 bis 14, wobei die Vorrichtungsspezifizierungseinheit (152) angepasst ist, die jeweiligen Abmessungen von zwei benachbarten Steuervorrichtungen (210) aus den Modellinformationen zu erfassen und, wenn die Abmessung von wenigstens einer Steuervorrichtung (210) kleiner oder gleich einem vorbestimmten Wert ist, einen Abstand zwischen der anderen Steuervorrichtung (210) und einer anderen Steuervorrichtung (210) auf der anderen Seite der einen Steuervorrichtung (210) als den Abstand zwischen den Steuervorrichtungen (210) zu berechnen.

16. Informationsverarbeitungsvorrichtung (1) gemäß einem der Ansprüche 12 bis 15, wobei die Wärmeerzeugungsvorhersageeinheit (153) angepasst ist, den Abstand zwischen den Steuervorrichtungen (210) zu verwenden, um einen Einfluss, verursacht durch die Wärmeerzeugung der benachbarten Steuervorrichtungen (210), vorherzusagen, und den Wärmeerzeugungszustand in dem Steuerfeld (2) unter Berücksichtigung des vorhergesagten Einflusses vorherzusagen.

17. Informationsverarbeitungsvorrichtung (1) gemäß einem der Ansprüche 1 bis 16, wobei die Vorrichtungsspezifikationseinheit (152) angepasst ist, eine Höhe der Position zu spezifizieren, an dem das Steuerfeld (2) mit der Vielzahl von Steuervorrichtungen (210) ausgestattet ist, angeordnet ist, und
die Wärmeerzeugungsvorhersageeinheit (153) angepasst ist, eine Korrektur entsprechend der Höhe durchzuführen, um den Wärmeerzeugungszustand vorherzusagen.

18. Informationsverarbeitungsverfahren, das umfasst:
einen Bilderkennungsschritt (S1) des Erfassens eines aufgenommenen Bildes eines Steuerfelds (2), das mit einer Vielzahl von Steuervorrichtungen (210) ausgestattet ist, in denen Vorrichtungsidentifikationsbilder (211), die Modellinformationen anzeigen, angeordnet sind, und des Erkennens der Vorrichtungsidentifikationsbilder (211), die in dem aufgenommenen Bild umfasst sind;
einen Vorrichtungsspezifikationsschritt (S2) des Spezifizierens der Modellinformationen und der Installationspositionen der Steuervorrichtungen (210) basierend auf den Vorrichtungsidentifikationsbildern (211), die durch den Bilderkennungsschritt (S1) erkannt werden;
einen Wärmeerzeugungsvorhersageschritt (S5) zum Vorhersagen eines Wärmeerzeugungszustands in dem Steuerfeld (2) basierend auf den Modellinformationen und der Installationspositionen der Steuervorrichtungen (210), die durch den Vorrichtungsspezifikationsschritt (S2) spezifiziert sind; und
einen Ausgabesteuerungsschritt (S7) zum Ausgeben von Wärmeerzeugungszustandsinformationen, die durch den Wärmeerzeugungsvorhersageschritt (S5) vorhergesagt werden, wobei das Informationsverarbeitungsverfahren **dadurch gekennzeichnet ist, dass**
der Ausgabesteuerungsschritt (S7) eine Wärmeerzeugungsverteilungskarte in dem Steuerfeld (2) basierend auf den Wärmeerzeugungszustandsinformationen erzeugt und ausgibt.

19. Informationsverarbeitungsprogramm, **dadurch gekennzeichnet, dass** ein Computer veranlasst wird, als die Informationsverarbeitungsvorrichtung (1) gemäß einem der Ansprüche 1 bis 17 zu arbeiten, und dass der Computer veranlasst wird, als jede der Einheiten zu arbeiten.

## Revendications

1. Appareil de traitement d'informations (1), comprenant :
une unité de reconnaissance d'image (151) apte à acquérir une image capturée d'un panneau de commande (2) équipé d'une pluralité de dispositifs de commande (210) dans lesquels des images d'identification de dispositif (211) indiquant des informations de modèle sont agencées, et reconnaître les images d'identification de dispositif (211) comprises dans l'image capturée ;
une unité de spécification de dispositif (152) apte à spécifier les informations de modèle et des positions d'installation des dispositifs de commande (210) sur la base des images d'identification de dispositif (211) qui sont reconnues par l'unité de reconnaissance d'image (151) ;
une unité de prédiction de génération de chaleur (153) apte à prédire un état de génération de chaleur dans le panneau de commande (2) sur la base des informations de modèle et des positions d'installation des dispositifs de commande (210) qui sont spécifiés par l'unité de spécification de dispositif (152) ; et
une unité de commande de sortie (154) apte à délivrer des informations d'état de génération de chaleur qui sont prédites par l'unité de prédiction de génération de chaleur (153), l'appareil de traitement d'informations (1) étant **caractérisé en ce que**
l'unité de commande de sortie (154) est apte à générer et délivrer une carte de distribution de génération de chaleur dans le panneau de commande (2) sur la base des informations d'état de génération de chaleur.

2. Appareil de traitement d'informations (1) selon la revendication 1, dans lequel l'unité de spécification de dispositif (152) est apte à spécifier de manière unique un dispositif de commande (210) à partir des images d'identification de dispositif (211) comprises dans l'image capturée par l'utilisation d'informations d'identification de dispositif qui associent les dispositifs de commande (210) aux images d'identification de dispositif (211).

3. Appareil de traitement d'informations (1) selon la revendication 1 ou 2, dans lequel l'unité de commande de sortie (154) est apte à délivrer des informations du dispositif de commande (210) pour lequel il est prédit qu'il a une quantité de génération de chaleur dépassant une valeur prédéterminée sur la base des informations d'état de génération de chaleur.

4. Appareil de traitement d'informations (1) selon l'une quelconque des revendications 1 à 3, dans lequel l'image capturée est une image capturée partielle du panneau de commande (2), et
l'unité de spécification de dispositif (152) est apte à spécifier les positions d'installation des dispositifs de commande (210) par la combinaison d'une pluralité des images capturées pour reconnaître une configuration globale du panneau de commande (2).

5. Appareil de traitement d'informations (1) selon l'une quelconque des revendications 1 à 4, dans lequel le panneau de commande (2) comprend une pluralité de régions d'accueil partiel (220), chacune d'elles accueillant une pluralité de dispositifs de commande (210), une image d'identification de région d'accueil (221) pour spécifier chaque région d'accueil partiel (220) étant agencée à un emplacement prédéterminé de la région d'accueil partiel (220), et
l'unité de spécification de dispositif (152) est apte à spécifier les positions d'installation des dispositifs de commande (210) sur la base d'une relation positionnelle entre les images d'identification de région d'accueil (221) et les images d'identification de dispositif (211).

6. Appareil de traitement d'informations (1) selon la revendication 5, dans lequel des informations relatives aux régions d'accueil partiel (220) sont acquises à partir des images d'identification de région d'accueil (221), et les informations sont utilisées pour spécifier un dispositif de commande (210) à partir des images d'identification de dispositif (211) comprises dans l'image capturée.

7. Appareil de traitement d'informations (1) selon l'une quelconque des revendications 1 à 6, dans lequel le panneau de commande (2) comprend une pluralité de régions d'accueil partiel (220), chacune d'elles accueillant une pluralité de dispositifs de commande (210), et
l'unité de spécification de dispositif (152) est apte à spécifier les informations de modèle et la position d'installation d'un dispositif de commande (210) spécifique sur la base des images d'identification de dispositif (211), et en outre spécifier la région d'accueil partiel (220) dans laquelle le dispositif de commande (210) spécifique est accueilli.

8. Appareil de traitement d'informations (1) selon la revendication 5 ou 6, dans lequel l'unité de spécification de dispositif (152) est apte à spécifier le volume du panneau de commande (2) sur la base des images d'identification de région d'accueil (221), spécifier le volume des dispositifs de commande (210) sur la base de l'image d'identification de dispositif (211), et utiliser le volume du panneau de commande (2) et le volume des dispositifs de commande (210) pour spécifier le volume d'une région vide dans le panneau de commande (2).

9. Appareil de traitement d'informations (1) selon l'une quelconque des revendications 1 à 8, dans lequel l'unité de commande de sortie (154) est apte à délivrer, sur la base des informations d'état de génération de chaleur, des informations du dispositif de commande (210) capable de réduire une distance entre des dispositifs de commande (210) agencés de manière adjacente parmi les dispositifs de commande (210).

10. Appareil de traitement d'informations (1) selon la revendication 3, dans lequel l'unité de commande de sortie (154) est apte à délivrer des informations de modèle d'un dispositif de commande (210) capable de remplacer le dispositif de commande (210) pour lequel il est prédit qu'il a une quantité de génération de chaleur dépassant une valeur prédéterminée.

11. Appareil de traitement d'informations (1) selon l'une quelconque des revendications 1 à 10, dans lequel l'unité de spécification de dispositif (152) est apte à spécifier la direction d'installation de chaque dispositif de commande (210) sur la base de l'orientation de l'image d'identification de dispositif (211) reconnue par l'unité de reconnaissance d'image (151) .

12. Appareil de traitement d'informations (1) selon la revendication 11, dans lequel l'unité de spécification de dispositif (152) est apte à utiliser les informations de modèle, la position d'installation et la direction d'installation de chaque dispositif de commande (210) pour calculer la distance entre les dispositifs de commande (210).

13. Appareil de traitement d'informations (1) selon la revendication 12, dans lequel l'unité de spécification de dispositif (152) est apte à régler une distance entre deux images d'identification de dispositif (211) adjacentes ou une distance entre des caractéristiques d'apparence des deux images d'identification de dispositif (211) adjacentes en tant que la distance entre deux dispositifs de commande (210) adjacents, acquérir la dimension de chaque dispositif de commande (210) à partir des informations de modèle, et calculer la distance entre les dispositifs de commande (210) en fonction d'une échelle dans l'image capturée.

14. Appareil de traitement d'informations (1) selon la revendication 12, dans lequel l'unité de spécification de dispositif (152) est apte à spécifier des surfaces se faisant face par la spécification des directions d'installation de deux dispositifs de commande (210) adjacents en fonction des orientations des images d'identification de dispositif (211), et calculer la distance entre les dispositifs de commande (210) en fonction de la dimension de chaque dispositif de commande (210) acquise à partir des informations de modèle et de l'échelle dans l'image capturée.

15. Appareil de traitement d'informations (1) selon l'une quelconque des revendications 12 à 14, dans lequel l'unité de spécification de dispositif (152) est apte à acquérir les dimensions respectives de deux dispositifs de commande (210) adjacents à partir des informations de modèle et calculer, lorsque la dimension de l'au moins dispositif de commande (210) est inférieure ou égale à une valeur prédéterminée, une distance entre l'autre dispositif de commande (210) et un autre dispositif de commande (210) sur l'autre côté du dispositif de commande (210) en tant que la distance entre les dispositifs de commande (210).

16. Appareil de traitement d'informations (1) selon l'une quelconque des revendications 12 à 15, dans lequel l'unité de prédiction de génération de chaleur (153) est apte à utiliser la distance entre les dispositifs de commande (210) pour prédire une influence provoquée par une génération de chaleur des dispositifs de commande (210) adjacents et prédire l'état de génération de chaleur dans le panneau de commande (2) compte tenu de l'influence prédite.

17. Appareil de traitement d'informations (1) selon l'une quelconque des revendications 1 à 16, dans lequel l'unité de spécification de dispositif (152) est apte à spécifier une altitude de l'emplacement auquel le panneau de commande (2) équipé de la pluralité de dispositifs de commande (210) est agencé, et
l'unité de prédiction de génération de chaleur (153) est apte à réaliser une correction en fonction de l'altitude pour prédire l'état de génération de chaleur.

18. Procédé de traitement d'informations, comprenant :
une étape de reconnaissance d'image (S1) pour acquérir une image capturée d'un panneau de commande (2) équipé d'une pluralité de dispositifs de commande (210) dans lesquels des images d'identification de dispositif (211) indiquant des informations de modèle sont agencées, et reconnaître les images d'identification de dispositif (211) comprises dans l'image capturée ;
une étape de spécification de dispositif (S2) pour spécifier les informations de modèle et des positions d'installation des dispositifs de commande (210) sur la base des images d'identification de dispositif (211) qui sont reconnues par l'étape de reconnaissance d'image (S1) ;
une étape de prédiction de génération de chaleur (S5) pour prédire un état de génération de chaleur dans le panneau de commande (2) sur la base des informations de modèle et des positions d'installation des dispositifs de commande (210) qui sont spécifiés par l'étape de spécification de dispositif (S2) ; et
une étape de commande de sortie (S7) pour délivrer des informations d'état de génération de chaleur qui sont prédites par l'étape de prédiction de génération de chaleur (S5), le procédé de traitement d'informations étant **caractérisé en ce que**
l'étape de commande de sortie (S7) génère et délivre une carte de distribution de génération de chaleur dans le panneau de commande (2) sur la base des informations d'état de génération de chaleur.

19. Programme de traitement d'informations **caractérisé en ce qu'**il amène un ordinateur à fonctionner en tant que l'appareil de traitement d'informations (1) selon l'une quelconque des revendications 1 à 17 et **en ce qu'**il amène l'ordinateur à fonctionner en tant que chacune des unités.
